# EUROPEAN PATENT APPLICATION

(11) **EP 3 552 739 A1**
(43) Date of publication of application: **16.10.2019**
(21) Application number: 19162512.8
(22) Date of filing: 13.03.2019
(51) Int. Cl.: B22F 3/105, B22F 3/15, B33Y 10/00, B22F 3/24

(54) **METHODS OF MANUFACTURE WITH ADDITIVE MANUFACTURING AND HOT PRESSING**

(30) Priority: 13.04.2018 GB 201806072
(71) Applicant: Rolls-Royce plc, London SW1E 6AT (GB)
(72) Inventor: Poole, David, Derby, Derbyshire DE24 8BJ (GB); Buller, Dane, Derby, Derbyshire DE24 8BJ (GB); Hare, Thomas, Derby, Derbyshire DE24 8BJ (GB)
(74) Representative: Rolls-Royce plc

(57) **Abstract**

A method of manufacture comprising: controlling additive manufacturing using a plurality of parameters to melt a metal to provide an object, at least one parameter of the plurality of parameters having a value selected to cause porosity in at least a first portion of the object; and controlling hot pressing of the object.

## Description

### TECHNOLOGICAL FIELD

The present disclosure concerns methods of manufacture.

### BACKGROUND

Additive manufacturing may be used to melt metal to manufacture objects. For example, a laser powder bed fusion (L-PBF) process may be used to manufacture a variety of two dimensional and three dimensional objects from metal powder. Such objects have elongated grains that are aligned in the direction of heat input and consequently have anisotropic mechanical properties. This microstructure limits the use of additive manufacturing in certain applications and industries.

### BRIEF SUMMARY

According to a first aspect there is provided a method of manufacture comprising: controlling additive manufacturing using a plurality of parameters to melt a metal to provide an object, at least one parameter of the plurality of parameters having a value selected to cause porosity in at least a first portion of the object; and controlling hot pressing of the object.

The method may further comprise selecting the value of the at least one parameter of the plurality of parameters.

The method may further comprise: receiving data identifying the metal; and selecting the value of the at least one parameter using the received data and a look-up table.

The value of the at least one parameter may be selected to cause porosity in at least the first portion of the object having a porosity in the range of 0.01% to 20%. The value of the at least one parameter may be selected to cause porosity in at least the first portion of the object having a porosity in the range of 2% to 10%.

The plurality of parameters may include one or more of: speed of laser movement; laser hatch spacing; laser power; laser stripe width; laser stripe overlap; baseplate temperature; powder layer thickness; and laser beam diameter.

At least one parameter of the plurality of parameters may have a value selected to cause porosity in a second portion of the object.

The porosity of the second portion may be different to the porosity of the first portion.

The value of the at least one parameter may be used to cause porosity in the whole of the object.

At least one parameter of the plurality of parameters may have a value selected to cause no porosity in another portion of the object.

The metal may comprise a metal powder.

The at least one parameter of the plurality of parameters may have a value to cause micro porosity in at least the first portion of the object.

Hot pressing of the object may comprise hot isostatic pressing of the object.

According to a second aspect there is provided apparatus comprising: a controller configured to: control additive manufacturing using a plurality of parameters to melt a metal to provide an object, at least one parameter of the plurality of parameters having a value selected to cause porosity in at least a first portion of the object; and control hot pressing of the object.

The controller may be configured to select the value of the at least one parameter of the plurality of parameters.

The controller may be configured to: receive data identifying the metal; and select the value of the at least one parameter using the received data and a look-up table.

The value of the at least one parameter may be selected to cause porosity in at least the first portion of the object having a porosity in the range of 0.01% to 20%. The value of the at least one parameter may be selected to cause porosity in at least the first portion of the object having a porosity in the range of 2% to 10%.

The plurality of parameters may include one or more of: speed of laser movement; laser hatch spacing; laser power; laser stripe width; laser stripe overlap; baseplate temperature; powder layer thickness; and laser beam diameter.

At least one parameter of the plurality of parameters may have a value selected to cause porosity in a second portion of the object.

The porosity of the second portion may be different to the porosity of the first portion.

The value of the at least one parameter may be used to cause porosity in the whole of the object.

At least one parameter of the plurality of parameters may have a value selected to cause no porosity in another portion of the object.

The metal may comprise a metal powder.

The at least one parameter of the plurality of parameters may have a value to cause micro porosity in at least the first portion of the object.

Hot pressing of the object may comprise hot isostatic pressing of the object.

According to a third aspect there is provided a computer program that, when read by a computer, causes performance of the method as claimed in the preceding paragraphs.

According to a fourth aspect there is provided a non-transitory computer readable storage medium comprising computer readable instructions that, when read by a computer, cause performance of the method as described in the preceding paragraphs.

According to a fifth aspect there is provided a signal comprising computer readable instructions that, when read by a computer, cause performance of the method as described in the preceding paragraphs.

According to a sixth aspect there is provided an object manufactured using the method as described in the preceding paragraphs.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### BRIEF DESCRIPTION

Embodiments will now be described by way of example only, with reference to the Figures, in which:
Fig. 1 illustrates a schematic diagram of apparatus for manufacturing an object according to various examples;
Fig. 2 illustrates a flow diagram of a method of manufacture according to various examples;
Fig. 3 illustrates a schematic diagram of a microstructure of a first portion of an object having porosity and manufactured using laser powder bed fusion, according to an example;
Fig. 4 illustrates a schematic diagram of a microstructure of a second portion of the object having no porosity and manufactured using laser powder bed fusion, according to an example;
Fig. 5 illustrates a schematic diagram of a microstructure of the first portion after hot isostatic pressing;
Fig. 6 illustrates a schematic diagram of a microstructure of the second portion after hot isostatic pressing; and
Fig. 7 illustrates a flow diagram of a method of generating a look-up table according to an example.

### DETAILED DESCRIPTION

In the following description, the terms 'connected' and 'coupled' mean operationally connected and coupled. It should be appreciated that there may be any number of intervening components between the mentioned features, including no intervening components.

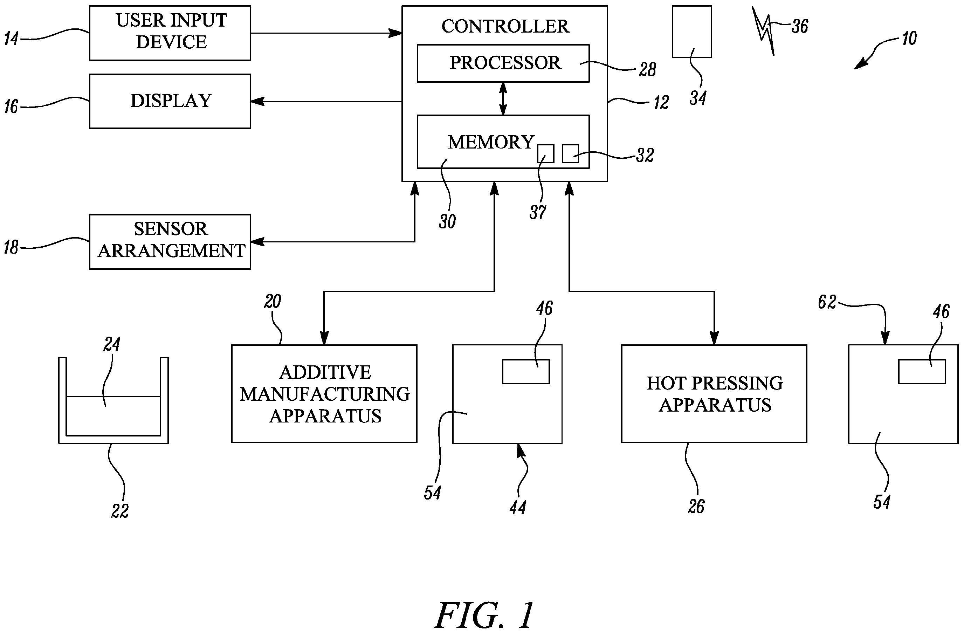

Fig. 1 illustrates a schematic diagram of apparatus 10 including a controller 12, a user input device 14, a display 16, a sensor arrangement 18, additive manufacturing apparatus 20, a container 22 storing metal 24, and a hot pressing apparatus 26.

In summary, the apparatus 10 is configured to additively manufacture an object and then hot press the object. A plurality of parameters are used in the additive manufacturing process to melt metal to provide the object, and at least one parameter of the plurality of parameters has a value that is selected to cause porosity in at least a first portion of the object. The porosity prevents the formation of elongated grains in the object.

In some examples, the apparatus 10 may be a module. As used herein, the wording 'module' refers to a device or apparatus where one or more features are included at a later time and, possibly, by another manufacturer or by an end user. For example, where the apparatus 10 is a module, the apparatus 10 may only include the controller 12, and the remaining features (such as the user input device 14, the display 16, the sensor arrangement 18, the additive manufacturing apparatus 20, the container 22, the metal 24, and the hot pressing apparatus 26) may be added by another manufacturer, or by an end user.

The controller 12, the user input device 14, the display 16, the sensor arrangement 18, the additive manufacturing apparatus 20, and the hot pressing apparatus 26 may be coupled to one another via a wireless link and may consequently comprise transceiver circuitry and one or more antennas. Additionally or alternatively, the controller 12, the user input device 14, the display 16, the sensor arrangement 18, the additive manufacturing apparatus 20, and the hot pressing apparatus 26 may be coupled to one another via a wired link and may consequently comprise interface circuitry (such as a Universal Serial Bus (USB) socket). It should be appreciated that the controller 12, the user input device 14, the display 16, the sensor arrangement 18, the additive manufacturing apparatus 20, and the hot pressing apparatus 26 may be coupled to one another via any combination of wired and wireless links.

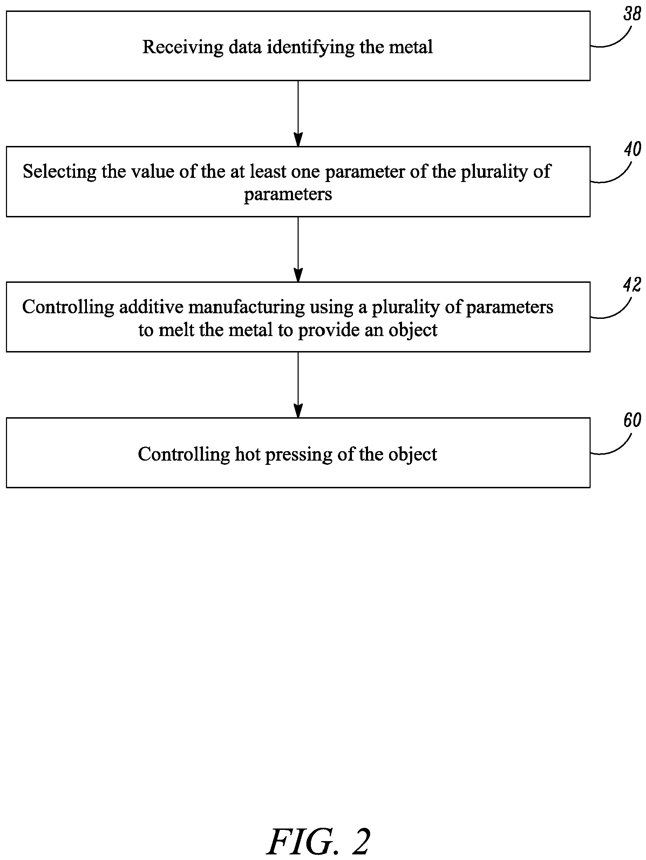

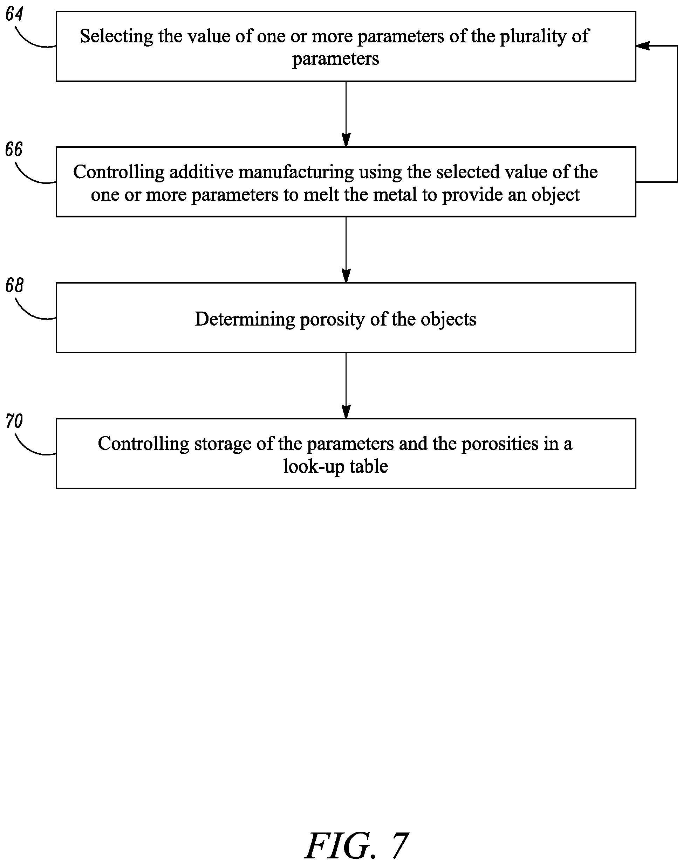

The controller 12 may comprise any suitable circuitry to cause performance of the methods described herein and as illustrated in Figs. 2 and 7. The controller 12 may comprise: control circuitry; and/or processor circuitry; and/or at least one application specific integrated circuit (ASIC); and/or at least one field programmable gate array (FPGA); and/or single or multi-processor architectures; and/or sequential/parallel architectures; and/or at least one programmable logic controllers (PLCs); and/or at least one microprocessor; and/or at least one microcontroller; and/or a central processing unit (CPU); and/or a graphics processing unit (GPU), to perform the methods.

In various examples, the controller 12 may comprise at least one processor 28 and at least one memory 30. The memory 30 stores a computer program 32 comprising computer readable instructions that, when read by the processor 28, causes performance of the methods described herein, and as illustrated in Figs. 2 and 7. The computer program 32 may be software or firmware, or may be a combination of software and firmware.

The controller 12 may be located in the additive manufacturing apparatus 20, in the hot pressing apparatus 26, or may be located remote from the additive manufacturing apparatus 20 and the hot pressing apparatus 26. In some examples, the controller 12 may be distributed between the additive manufacturing apparatus 20, and/or the hot pressing apparatus 26 and/or a location remote from the additive manufacturing apparatus 20 and the hot pressing apparatus 26.

The processor 28 may include at least one microprocessor and may comprise a single core processor, may comprise multiple processor cores (such as a dual-core processor, a quad-core processor, or an octa-core processor), or may comprise a plurality of processors (at least one of which may comprise multiple processor cores).

The memory 30 may be any suitable non-transitory computer readable storage medium, data storage device or devices, and may comprise a hard disk and/or a solid state drive. The memory 30 may be permanent non-removable memory, or may be removable memory (such as a universal serial bus (USB) flash drive or a secure digital (SD) card). The memory 30 may include: local memory employed during actual execution of the computer program 32; bulk storage; and cache memories which provide temporary storage of at least some computer readable or computer usable program code to reduce the number of times code may be retrieved from bulk storage during execution of the code.

The computer program 32 may be stored on a non-transitory computer readable storage medium 34. The computer program 32 may be transferred from the non-transitory computer readable storage medium 34 to the memory 30. The non-transitory computer readable storage medium 34 may be, for example, a USB flash drive, a secure digital (SD) card, an optical disc (such as a compact disc (CD), a digital versatile disc (DVD) or a Blu-ray disc). In some examples, the computer program 32 may be transferred to the memory 30 via a signal 36 (such as a wireless signal or a wired signal).

Input/output devices may be coupled to the controller 12 either directly or through intervening input/output controllers. Various communication adaptors may also be coupled to the controller 12 to enable the apparatus 10 to become coupled to other apparatus or remote printers or storage devices through intervening private or public networks. Non-limiting examples include modems and network adaptors of such communication adaptors.

The user input device 14 may comprise any suitable device or devices for enabling an operator to at least partially control the apparatus 10. For example, the user input device 14 may comprise one or more of a keyboard, a keypad, a touchpad, a graphics tablet, a touchscreen display, and a computer mouse. The controller 12 is configured to receive signals from the user input device 14.

The display 16 may be any suitable display for conveying information to an operator. For example, the display 16 may comprise a liquid crystal display (LCD), a light emitting diode display, an organic light emitting diode (OLED) display an active matrix organic light emitting diode (AMOLED) display, a thin film transistor (TFT) liquid crystal display, or a cathode ray tube (CRT) display. The controller 12 is arranged to provide a signal to the display 16 to cause the display 16 to convey information to an operator.

The sensor arrangement 18 may comprise any suitable sensor or sensors for sensing one or more properties of the metal 24 stored in the container 22. In some examples, the sensor arrangement 18 may determine the one or more materials of the metal 24 from the sensed one or more properties. For example, the sensor arrangement 18 may comprise ultrasonic sensing equipment, or infrared, X-Ray, visible light or other electromagnetic wave sensing equipment. The controller 12 is configured to receive data from the sensor arrangement 18.

The additive manufacturing apparatus 20 may comprise a powder bed fusion (PBF) apparatus and/or blown powder apparatus and/or a wire feed apparatus. The additive manufacturing apparatus 20 may comprise a laser for emitting a laser beam, and/or a source for emitting an electron beam. The controller 12 is configured to control the operation of the additive manufacturing apparatus 20 using a plurality of parameters. Where the additive manufacturing apparatus 20 comprises a laser, examples of parameters include speed of laser movement; laser hatch spacing; laser power; laser stripe width; laser stripe overlap; baseplate temperature; powder layer thickness; and laser beam diameter. Where the additive manufacturing apparatus 20 comprises an electron beam source, examples of parameters include speed of electron beam movement; electron beam power; baseplate temperature; powder layer thickness; and electron beam diameter.

The memory 30 stores a look-up table 37 comprising: a plurality of material types; and values for the plurality of parameters for each material type. At least some of the values of the plurality of parameters stored in the look-up table 37 cause porosity when they are used to additively manufacture an object. In some examples, the look-up table 37 may additionally comprise a plurality of porosity values (for example, two percent, five percent, and ten percent and so on) for each material type, and each porosity value may have its own set of parameter values. One method for creating the look-up table 37 is described later in the description with reference to Fig. 7. The controller 12 is configured to read the look-up table 37 using data identifying the metal 24 (and, optionally, data identifying the desired porosity value) to select one or more parameter values.

The container 22 comprises one or more receptacles for storing metal 24 for use by the additive manufacturing apparatus 20. For example, the container 22 may comprise a first receptacle for storing a first metal powder, and a second receptacle for storing a second metal powder (which is different to the first metal powder). In another example, the container 22 may comprise one or more receptacles for storing metal wire for use by the additive manufacturing apparatus 20. The metal 24 may be provided to the additive manufacturing apparatus 20 by a human operator or by a robot. In some examples, the container 22 may be a part of the additive manufacturing apparatus 20.

The hot pressing apparatus 26 may be any apparatus for applying heat and pressure to an object. For example, the hot pressing apparatus 26 may be a hot isostatic pressing apparatus that comprises a high pressure containment vessel, a heat source for heating an object within the vessel, and a pump arrangement for causing the pressure inside the vessel to increase. The controller 12 is configured to control the operation of the hot pressing apparatus 26. For example, where the apparatus 26 is a hot isostatic pressing apparatus, the controller 12 may control the heat source to provide thermal energy to an object within the vessel, and may control the pump arrangement to pump an inert gas (such as argon) into the vessel.

The operation of the apparatus 10 is described in the following paragraphs with reference to Fig. 2.

At block 38, the method may include receiving data identifying the metal to be used to manufacture the object. For example, the controller 12 may receive data from the sensor arrangement 18 that identifies one or more materials of metal powder 24 stored in the container 22. In another example, the controller 12 may receive data from the sensor arrangement 18 that identifies one or more properties of metal powder 24 stored in the container 22.

In a further example, the controller 12 may control the display 16 to display the names of a plurality of materials. An operator may use their knowledge of the composition of the metal 24 to control the user input device 14 to select the name of one of the displayed materials. The controller 12 receives data from the user input device 14 and identifies the material of the metal 24 using the input data.

At block 40, the method may include selecting a value of at least one parameter of the plurality of parameters to cause porosity in at least a first portion of the object to be manufactured. For example, the controller 12 may read the look-up table 37 using the data received at block 38 to select a value of at least one parameter of the plurality of parameters. In some examples, an operator may use the user input device 14 to input a desired porosity value for the object, and the controller 12 may use that input and the data received at block 38 to read the look-up table 37 to select a value of at least one parameter for controlling additive manufacturing. The value of the at least one parameter may be selected to cause the first portion to have a porosity in the range of 0.01% to 20%. In another example, the value of the at least one parameter may be selected to cause the first portion to have a porosity in the range of 0.01% to 10%. In a further example, the value of the at least one parameter may be selected to cause the first portion to have a porosity in the range of 2% to 10%.

In some examples, it may be desired for the object to comprise two or more portions having different porosities. In such examples, an operator may use the user input device 14 to input two or more desired porosity values for the object, and the controller 12 may use those inputs and the data received at block 38 to read the look-up table 37 to determine parameter values for the two or more portions.

At block 42, the method includes controlling additive manufacturing using a plurality of parameters to melt a powder to provide an object 44 having porosity in at least a first portion 46. For example, the controller 12 may use the parameter value or values selected at block 40 to control the additive manufacturing apparatus 20 to melt the metal powder 24 to provide the object 44. In another example where the method does not include blocks 38 and 40, the controller 12 may use a preselected parameter value or values to control the additive manufacturing apparatus 20 to melt the metal powder 24 to provide the object 44.

It should be appreciated that the additive manufacturing at block 42 may fully liquefy the powder particles of the metal powder 24 to form the object 44. In examples where the additive manufacturing apparatus 20 is a laser powder bed fusion apparatus, the laser beam may liquefy the metal powder and form weld pools in the powder bed.

The porosity of the first portion 46 may be microscopic. That is, the first portion 46 may be said to have 'micro porosity' and the pores (which may also be referred to as 'voids') may have dimensions between 1 micron and hundreds of microns. In other examples, the porosity of the first portion 46 may be macroscopic and consequently the pores may be visible to the human eye (without the use of magnifying instrumentation).

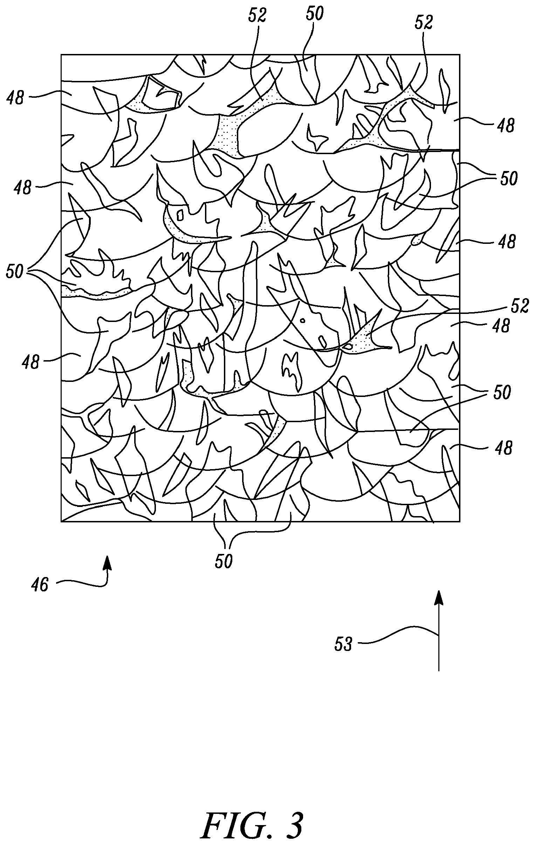

Fig. 3 illustrates a microstructure of the first portion 46 of the object 44 according to an example. The object 44 is manufactured using laser powder bed fusion and the first portion 46 has a porosity of five percent. The first portion 46 includes a plurality of weld pools 48, a plurality of grains 50, and a plurality of pores 52 that limit the growth of the plurality of grains 50 in the direction of arrow 53 (that is, the direction of heat input to the object 44).

In some examples, at least one parameter of the plurality of parameters has a value selected to cause porosity (which may be micro porosity) in a second portion 54 of the object 44. The porosity of the second portion 54 may be different to the porosity of the first portion 46. For example, the porosity of the first portion 46 may be five percent (as illustrated in Fig. 3), and the porosity of the second portion 54 may be ten percent.

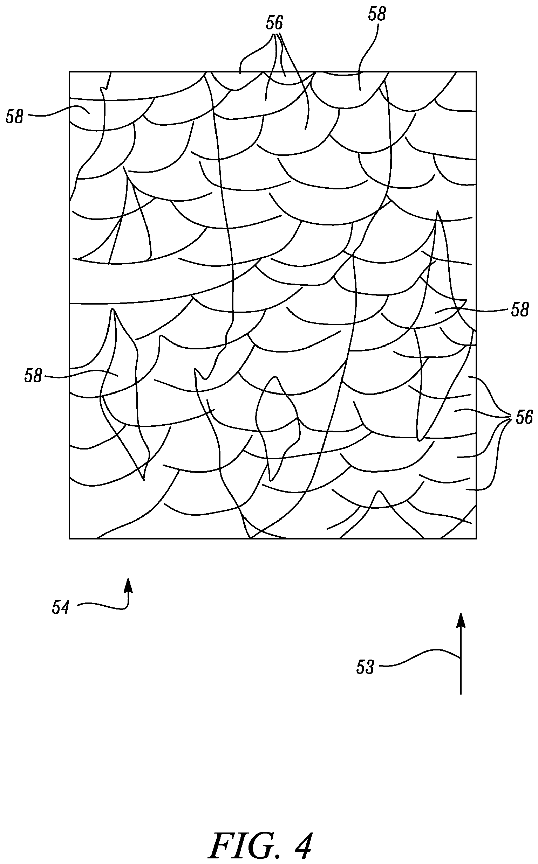

In other examples, the plurality of parameters may be selected to cause zero porosity in the second portion 54 of the object 44. For example, Fig. 4 illustrates a microstructure of the second portion 54 of the object 44 having zero porosity (in other words, the second portion 54 is fully dense). The second portion 54 includes a plurality of weld pools 56 and a plurality of grains 58. Since the second portion 54 does not comprise any pores, the growth of the grains 58 in the direction of arrow 53 is relatively unrestricted and consequently, the average length of the grains 58 is greater than the average length of the grains 50.

It should be appreciated that the object 44 may comprise any number of portions having different porosities to one another (and may include one or more portions having a porosity of zero). For example, the object 44 may comprise the first portion 46 having a first porosity value (five percent for example); the second portion 54 having a second porosity value (two percent for example); and a third portion having a porosity value of zero.

At block 60, the method includes controlling hot pressing of the object 44 to provide a hot pressed object 62. For example, the object 44 may be moved from the additive manufacturing apparatus 20 to the hot isostatic pressing apparatus 26 by an operator and/or by a robot, and the controller 12 may control the hot isostatic pressing apparatus 26 to hot isostatically press the object 44. In one example where the metal powder 24 is stainless steel powder and the object 44 is manufactured using laser powder bed fusion, the hot isostatic pressing process parameters may be two hours at one thousand and fifty Celsius and at one hundred and thirty eight Mega Pascal (MPa).

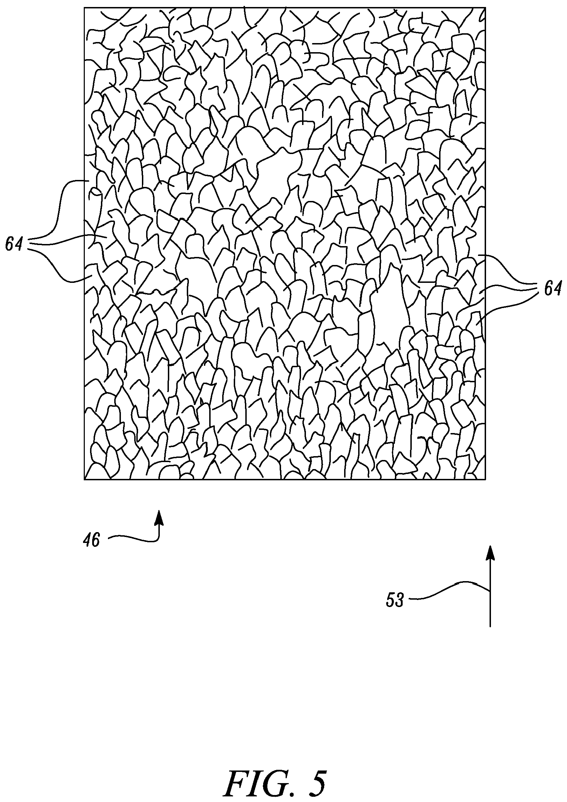

Fig. 5 illustrates a microstructure of the first portion 46 after hot isostatic pressing. The high pressures and temperatures of the hot isostatic pressing process recrystallizes the object 44 and causes the plurality of pores 52 to close and consequently, the first portion 46 of the object 62 has zero (or almost zero) porosity. Additionally, the plurality of grains 50 of the first portion 46 are equiaxial due to the restricted growth of the grains 50 during the additive manufacturing process.

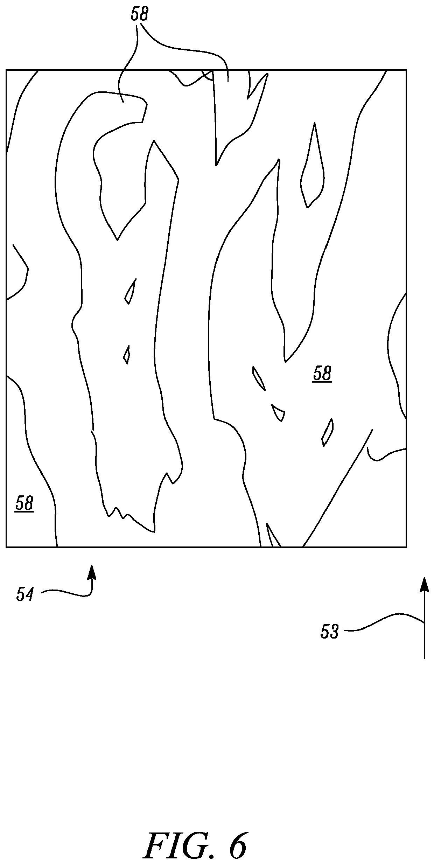

Fig. 6 illustrates a microstructure of the second portion 54 after hot isostatic pressing (where the second portion 54 of the object 44 had zero porosity). The grains 58 of the second portion 54 are elongated in the direction of arrow 53 and have an average length that is greater than the average length of the grains 50 illustrated in Fig. 5.

The apparatus 10 and the methods described above may provide several advantages. For example, the equiaxed grains 50 of the first portion 46 of the object 62 may provide the first portion 46 with isotropic mechanical properties. Furthermore, where the object 44 includes portions having different porosities (including portions having zero porosity), the portions of the object 62 may have differing mechanical properties. For example, one portion of the object 62 may have isotropic mechanical properties, and an adjacent portion of the object 62 may have anisotropic mechanical properties. Other advantages include increased build speed relative to additive manufacturing without porosity, and increased sensitivity for non-destructive testing techniques due to finer grain size.

One example of a method for generating the look-up table 37 is described in the following paragraphs with reference to Fig. 7. The method may be performed by an operator, or may be performed by the controller 12, or may be performed partly by an operator and partly by the controller 12.

At block 64, the method includes selecting the value of one or more parameters of the plurality of parameters for the additive manufacturing apparatus 20. For example, where the additive manufacturing apparatus 20 includes a laser, the values for one of more of: the speed of laser movement; the laser hatch spacing; the laser power; the laser stripe width; the laser stripe overlap; the baseplate temperature; the powder layer thickness; and the laser beam diameter may be selected.

At block 66, the method includes controlling additive manufacturing using the selected value of the one or more parameters to melt the metal 24 to provide the object. Depending on the parameter values selected at block 64, the object may or may not have porosity.

Blocks 64 and 66 are then repeated with different parameter values to manufacture one or more additional objects. For example, the value of one of: the speed of laser movement; the laser hatch spacing; the laser power; the laser stripe width; the laser stripe overlap; the baseplate temperature; the powder layer thickness; and the laser beam diameter is changed, and the values of the remaining parameters are kept constant for each of the one or more additional objects.

At block 68, the method includes determining the porosity of the objects manufactured at block 66.

At block 70, the method includes controlling storage of at least some of the parameters and the porosities in the look-up table 37. For example, where an object has a desired porosity, the controller 12 may store the following in the look-up table: the material (or materials) of metal powder and/or one or more properties of the metal powder, the plurality of parameters used to additively manufacture that object (selected at block 64), and the porosity of that object (determined at block 68).

It will be understood that the invention is not limited to the embodiments above-described and various modifications and improvements can be made without departing from the concepts described herein. For example, the different embodiments may take the form of an entirely hardware embodiment, an entirely software embodiment, or an embodiment containing both hardware and software elements.

Except where mutually exclusive, any of the features may be employed separately or in combination with any other features and the disclosure extends to and includes all combinations and sub-combinations of one or more features described herein.

## Claims

1. A method of manufacture comprising:
controlling additive manufacturing using a plurality of parameters to melt a metal to provide an object, at least one parameter of the plurality of parameters having a value selected to cause porosity in at least a first portion of the object; and
controlling hot pressing of the object.

2. A method as claimed in claim 1, further comprising selecting the value of the at least one parameter of the plurality of parameters.

3. A method as claimed in claim 1 or 2, further comprising: receiving data identifying the metal; and selecting the value of the at least one parameter using the received data and a look-up table.

4. A method as claimed in any of the preceding claims, wherein the value of the at least one parameter is selected to cause porosity in at least the first portion of the object having a porosity in the range of 0.01% to 20%.

5. A method as claimed in any of the preceding claims, wherein the plurality of parameters include one or more of: speed of laser movement; laser hatch spacing; laser power; laser stripe width; laser stripe overlap; baseplate temperature; powder layer thickness; and laser beam diameter.

6. A method as claimed in any of the preceding claims, wherein at least one parameter of the plurality of parameters has a value selected to cause porosity in a second portion of the object.

7. A method as claimed in claim 6, wherein the porosity of the second portion is different to the porosity of the first portion.

8. A method as claimed in any of the preceding claims, wherein the value of the at least one parameter is used to cause porosity in the whole of the object.

9. A method as claimed in any of claims 1 to 7, wherein at least one parameter of the plurality of parameters having a value selected to cause no porosity in another portion of the object.

10. A method as claimed in any of the preceding claims, wherein the metal comprises a metal powder.

11. A method as claimed in any of the preceding claims, wherein the at least one parameter of the plurality of parameters has a value to cause micro porosity in at least the first portion of the object.

12. A method as claimed in any of the preceding claims, wherein hot pressing of the object comprises hot isostatic pressing of the object.

13. Apparatus comprising: a controller configured to perform the method as claimed in any of the preceding claims.

14. A computer program that, when read by a computer, causes performance of the method as claimed in any of claims 1 to 12.

15. A non-transitory computer readable storage medium comprising computer readable instructions that, when read by a computer, cause performance of the method as claimed in any of claims 1 to 12.
